# EUROPEAN PATENT SPECIFICATION

(11) **EP 1 189 978 B1**
(45) Date of publication and mention of the grant of the patent: **30.07.2003**
(21) Application number: 00938899.2
(22) Date of filing: 01.06.2000
(51) Int. Cl.: C08J 9/34, B32B 27/08

(54) **PROCESS FOR PREPARING AN INTEGRAL POLYPROPYLENE FOAM**
VERFAHREN ZUR HERSTELLUNG EINES POLYPROPYLENSCHAUMSTOFFS MIT INTEGRALER HAUT
PROCEDE POUR PREPARER UNE MOUSSE DE POLYPROPYLENE INTEGRALE

(30) Priority: 01.06.1999 GB 9912739
(43) Date of publication of application: 27.03.2002
(73) Proprietor: Borealis Technology Oy, 06101 Porvoo (FI)
(72) Inventor: BORVE, Kjetil, Larsen, N-3280 Tjodalyng (NO); BAANN, Henning, N-3942 Porsgrunn (NO)
(74) Representative: Campbell, Neil Boyd
(86) International application number: GB0002090
(87) International publication number: WO00073369

(56) References cited:
- WO-A-97/25250
- US-A- 4 657 811
- US-A- 4 705 715
- US-A- 5 845 588

## Description

The invention relates to a process for the preparation of a polyolefin foam having an outer skin and to the skin-bearing foam product itself as well as articles manufactured therewith or formed therefrom.

For many purposes, e.g. in automotive parts such as dashboards, door panels, head liners, boot inlays, etc., it is known to use a polymeric material comprising a foam substrate with an essentially non-porous outer "skin". Commonly the material is a laminate of a foamed polyurethane substrate and a PVC or PVC/ABS (acrylonitrile butadiene styrene) skin material; however such products have also been made by laminating together a foamed polypropylene substrate and a non-foamed polypropylene skin material.

This is not an efficient process and at the temperatures required for lamination it is necessary to use a cross-linked polypropylene foam as otherwise the foam collapses.

US Patent No. 5845588 describes plastic palletts fabricated together by the combination of various separate components. The invention therein primarily concerns the make-up of the pallet which comprises deck, and upper and lower runner components. Whilst the patent does suggest manufacturing pallets comprising a skin layer and a foamed layer there is no description of the process requirements for producing a foamed polypropylene structure.

We have now found that skin-bearing polypropylene foams may be prepared by coextrusion of a substantially non-crosslinked polypropylene foam and a polypropylene skin material. Such skin-bearing foams have particular advantages over the known PVC and PVC/ABS skinned polyurethane foams in terms of ease of product recycling since the products contains only one basic type of polymer. Moreover the foam:skin laminate strength is better than that achieved with lamination of equivalent pre-formed foam and skin layers.

Thus viewed from one aspect the invention provides a process for the preparation of a skin-bearing polypropylene foam material, said process comprising coextruding a first polypropylene composition containing a blowing agent and a second polypropylene composition whereby to form a non-foamed skin of said second polypropylene composition on a foamed layer of said first polypropylene composition which foamed layer contains closed foam cells, said first composition having a melt strength of at least 0.5g, preferably at least 1g, especially at least 2g, e.g. at least 5g and a strain hardening of at least 0.05 g/(m.min), preferably at least 0.1g/(m.min), especially at least 0.2 g/(m.min) and said second composition having a Shore D value of 15 to 55, e.g. 20 to 45.

In the process of the invention, the blowing agent is preferably used at a concentration such that the resultant foam layer has a density of 10 to 350 kg/m³ preferably 15 to 150 kg/m³. The blowing agent may be an inorganic or organic gas generating agent, e.g. a chemical having a boiling point in the range -50 to 100°C, for example an alkane such as propane, isobutane or n-butane, etc., or an essentially inert gas such as nitrogen, carbon dioxide or helium. Typically, the blowing agent, which may be introduced into the first polypropylene composition before or more preferably after that composition is introduced into the extruder, will be used at concentrations of 0.5 to 5 wt%, more preferably 1 to 2.5 wt%, relative to the first composition. The cell structure of the foam may be controlled by addition of a foam nucleating agent, e.g. a chemical blowing agent such as for example citric acid or sodium bicarbonate, or a particulate filler such as talc. The foaming is effected such as to produce a closed cell structure and a density of from 15 to 350 kg/m³. The extrusion of such polypropylene foams is described for example in EP-A-743337.

Viewed from a further aspect the invention provides a polypropylene material having a substrate of a foamed first polypropylene having a melt strength of at least 1g, a strain hardening of at least 0.1g/(m.min), closed foam cells, and a density of between 10 and 350 kg/m³ and on said substrate a skin of a non-foamed second polypropylene having a Shore D value of 15 to 55, e.g. 20 to 45.

The invention in other aspects also provides the use of a non-foamed, polypropylene having a Shore D value of 15 to 55, e.g. 20 to 45, for the preparation of articles of a coextruded multi-layer polypropylene which includes a foamed layer with a non-foamed skin and also the use of a foamable, polypropylene having a melt strength of at least 1g and a strain hardening of at least 0.1g/(m.min) for the preparation of coextruded multi-layer polypropylene which includes a foamed layer with a non-foamed skin.

The polypropylene used for production of the foam is preferably a high melt strength, strain hardening polypropylene, e.g. a polypropylene having the following properties: melt flow index (230°C/2.16 kg) of 0.1 to 200, preferably 0.2 to 50, especially 0.3 to 25 g/10 min, an ethylene content of 0 (polypropylene homopolymer) to 50 percent by weight, preferably 0.05 to 25 percent by weight, especially 0.5 to 15 percent by weight. These grades may be prepared by e.g. gamma source irradiation and are available as e.g. Montell Profax 814 from Montell. Other examples of preparing such high melt strength polypropylene involve silane grafting and long chain branching, peroxide treatment (e.g. Daploy 130D from Borealis), and long chain branching of unsaturated polypropylene. Alternatively they may be prepared in a reactor process by using Ziegler-Natta and/or a metallocene catalyst. Other documents describing the preparations of high melt strength polypropylene include DE-A-19603438, DE-A-19603439, DE-A-19603600 and DE-A-19607430.

The first polypropylene composition may comprise a single polypropylene or a mixture of two or more polypropylenes. The first polypropylene composition may contain propylene homopolymers or copolymers (e.g. with C₂ and/or C₄₋₁₀ α-olefin copolymers) and should preferably be at least partially xylene soluble at 150°C.

The polypropylene used for the preparation of the skin again may conveniently comprise one or more than one polypropylene and propylene homo and copolymers (e.g. with C₂ and/or C₄₋₁₀ α-olefin comonomers) may be used. The composition again is preferably at least partially soluble in xylene at 150°C and is preferably a polypropylene having the following properties: melt flow index (230°C/2.16 kg) of 0.2 to 25 g/10 min, an ethylene content of 0 (polypropylene homopolymer) to 25 percent by weight. This polypropylene material may also contain fillers like: talc (surface modified or not); wollastonite; mica; a modified polypropylene material like maleic anhydride or glycidyl methacrylate functionalized polypropylene; an elastomer material like ethylene-propylene rubber; and an acid amide like erucamide. These polypropylene grades may be prepared by a continuous extruder compounding step and are commercially available as e.g EA 040T from Borealis. Other examples of preparing suitable materials for application as skin are described in EP-A-673396.

Typically, coextrusion will be effected to produce a foam thickness of 0.5 to 10 mm, preferably 1 to 7 mm, more preferably 2 to 5 mm and a skin thickness of 0.1 to 3 mm, preferably 0.3 to 1.5 mm, more preferably 0.4 to 1.1 mm. The skin may if desired be embossed or vacuum formed to create a desired design or texture.

In the coextrusion process, the two polypropylenes are preferably extruded at temperatures within 330°C, more preferably at the same temperature, e.g. at temperatures in the range 145 to 255°C. For this purpose a multi-orificed extrusion die or a plurality of dies may be used. If desired one of the polypropylenes may be extruded to produce a surface onto which, while it is still above its melt temperature, the second polypropylene may be extruded.

If desired, the coextrusion may involve placing a skin on either side of a foam layer. Thus the non-laminate multilayer products of the invention may have two, three or more layers.

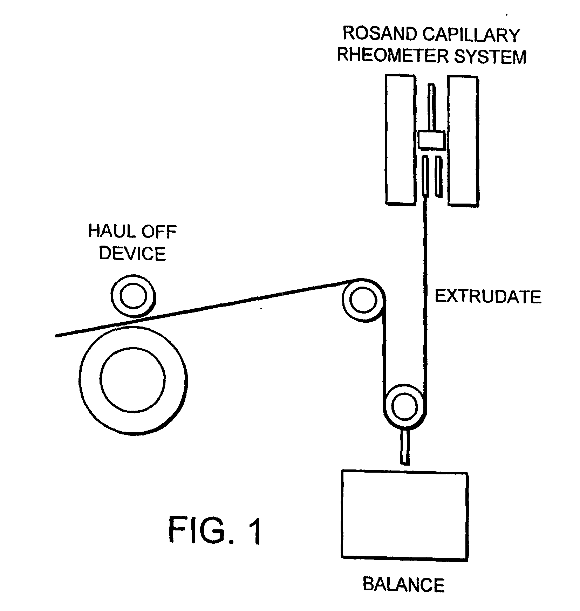

In the present invention, Shore D values are measured according to ISO 868. The melt strength is measured by using an apparatus as seen on the schematic diagram of the attached figure 1. The apparatus consists of a capillary rheometer of trademark "Rosand RH-7", a haul off device and a force transducer to measure the strength of the polymer melt. The inner diameter of the barrel is 15 mm, and is equipped with a fitting piston. A polymer sample was conditioned in the rheometer for 10 minutes at 190°C. Then the sample was extruded by means of a piston at piston velocity of 1 mm/min to press the melt vertically downwards through a cylindrical die having an opening inlet angle of 190 degrees, a diameter of 1 mm and a length of 16 mm. From the die, the monofilament passed essentially vertically down to the force measuring device, placed at a position of 25 cm below the die outlet. At this point the monofilament has solidified. The force measuring device consists of a free rolling wheel under which the monofilament passes, the free rotating wheel being attached to a weighing device. The monofilament then passes essentially vertically upwards onto one free rolling roller and is wound onto the last roller. The draw off speed is determined by this last roller, and is set at 1 m/min at this point.

The force that is exerted upwards by the polymer upwards on the free rolling wheel is measured in grams. Then this value is divided by a factor of two to get the melt strength. Thus if the total force exerted upwards by the polymer monofilament on the wheel is 0.098 N, this is measured as 10 g, and this again corresponds to a melt strength of 5 g.

Strain hardening is a measure of the slope of the curve obtained when melt strength is plotted against haul off speed.

The skin:foam products of the invention may be used for example in automotive parts such as dashboards, door panels, head liners, boot inlays, etc. Such articles, e.g. components for motor vehicles, also form a further aspect of the invention.

The invention will now be described further with reference to the following non-limiting Examples.

### Examples 1 to 5

Non-foamed polypropylene (Borealis EA040T from Borealis) and a foamable polypropylene (Daploy 130D and/or Daplen DM55 from Borealis) impregnated during foam extrusion with isobutane, are co-extruded at a temperature of about 170°C through a twin screw extruder (foam) and a single screw extruder (skin) having a round die of 350 mm circumference and a millimeter sized radial width operating at a total mass flow of 150 kg/hour so as to produce a twin layer tube having a foamed layer on the inner side and a non-foamed skin layer on the outer. The polymers used and the densities of the overall resultant structure are set out in Table 1 below:

**Table 1**

| Example No. | Foamed Layer¹ (wt ratio) | Blowing agent (wt%) | Overall Density (g/cm³) |
|---|---|---|---|
| 1 | 50:50 | 1.3 | 0.250 |
| 2 | 70:30 | 2 | 0.200 |
| 3 | 100:0 | 2 | 0.125 |
| 4 | 0:100 | 2 | 0.675 |
| 5² | 100:0 | 2 | 0.300 |

| | | | |
|---|---|---|---|
| ¹ - weight ratio of Daploy 130D to Daplen DM55 | | | |
| ² - laminated together after extrusion | | | |

Examples 4 and 5 are comparative. Example 4 does not use a high melt strength polypropylene but only a polypropylene homopolymer. Example 5 has a higher density than equivalent Example 3 due to partial destruction of foam cells during lamination.

The coextruded multilayer polypropylene of Examples 1 to 3 has a heat- and UV-stable skin on an impact softening, firmly-attached foam substrate.

## Claims

1. A process for the preparation of a skin-bearing polypropylene foam material, said process comprising coextruding a first polypropylene composition containing a blowing agent and a second polypropylene composition whereby to form a non-foamed skin of said second polypropylene composition on a foamed layer of said first polypropylene composition which foamed layer contains closed foam cells, said first composition having a melt strength of at least 1g and a strain hardening of at least 0.1g/(m.min) and said second composition having a Shore D value of 15 to 55.

2. A process as claimed in claim 1 wherein said foamed layer has a density of 10 to 350 kg/m³.

3. A process as claimed in claim 1 or 2 wherein said second composition has a Shore D value of 20 to 45.

4. A process as claimed in any one of claims 1 to 3 wherein said first polypropylene composition is substantially non-crosslinked.

5. A process as claimed in any one of claims 1 to 4 wherein the blowing agent is introduced into the first polypropylene composition after said composition is introduced into an extruder.

6. A process as claimed in any one of claims 1 to 5 wherein said blowing agent is used at concentrations of 1 to 2.5 wt % relative to said first polypropylene composition.

7. A process as claimed in any one of claims 1 to 6 wherein said first polypropylene composition has a melt flow index (230°C/2.16 kg) of 0.3 to 25 g/10 min and an ethylene content of 0 to 25% wt.

8. A polypropylene material having a substrate of a foamed first polypropylene having a melt strength of at least 1g, a strain hardening of at least 0.1g/(m.min), closed foam cells, and a density of between 10 and 350 kg/m³ and on said substrate a skin of a non-foamed second polypropylene having a Shore D value of 15 to 55.

9. The use of a non-foamed, polypropylene having a Shore D value of 15 to 55 for the preparation of articles of a coextruded multi-layer polypropylene which includes a foamed layer with a non-foamed skin.

10. The use of a foamable, polypropylene having a melt strength of at least 1g and a strain hardening of at least 0.1g/(m.min) for the preparation of articles of a coextruded multi-layer polypropylene which includes a foamed layer with a non-foamed skin.

11. An article comprising a polypropylene material having a substrate of a foamed first polypropylene having a melt strength of at least 1g, a strain hardening of at least 0.1g/(m.min), closed foam cells, and a density of between 10 and 350 kg/m³ and on said substrate a skin of a non-foamed second polypropylene having a Shore D value of 15 to 55.

12. An article as claimed in claim 11 in the form of a component for a motor vehicle.

## Patentansprüche

1. Verfahren zur Herstellung von eine Haut aufweisendem Polypropylenschaummaterial, wobei das Verfahren das Coextrudieren einer ersten Polypropylenzusammensetzung, die ein Blähmittel enthält, und einer zweiten Polypropylenzusammensetzung umfaßt, wodurch eine ungeschäumte Haut aus der zweiten Polypropylenzusammensetzung auf der geschäumten Schicht aus der ersten Polypropylenzusammensetzung erzeugt wird, wobei die geschäumte Schicht geschlossene Schaumstoffzellen enthält, wobei die erste Zusammensetzung eine Schmelzfestigkeit von mindestens 1 g und eine Kaltverfestigung von mindestens 0,1 g/(m·min) aufweist und die zweite Zusammensetzung einen Shore-D-Wert von 15 bis 55 aufweist.

2. Verfahren nach Anspruch 1, wobei die geschäumte Schicht eine Dichte von 10 bis 350 kg/m³ aufweist.

3. Verfahren nach Anspruch 1 oder 2, wobei die zweite Zusammensetzung einen Shore-D-Wert von 20 bis 45 aufweist.

4. Verfahren nach einem der Ansprüche 1 bis 3, wobei die erste Polypropylenzusammensetzung im wesentlichen unvernetzt ist.

5. Verfahren nach einem der Ansprüche 1 bis 4, wobei das Blähmittel in die erste Polypropylenzusammensetzung eingeführt wird, nachdem die Zusammensetzung in einen Extruder eingeführt worden ist.

6. Verfahren nach einem der Ansprüche 1 bis 5, wobei das Blähmittel mit Konzentrationen von 1 bis 2,5 Gew.-%, bezogen auf die erste Polypropylenzusammensetzung, verwendet wird.

7. Verfahren nach einem der Ansprüche 1 bis 6, wobei die erste Polypropylenzusammensetzung einen Schmelzindex (230°C/2,16 kg) von 0,3 bis 25 g/10 min und einen Ethylengehalt von 0 bis 25 Gew.-% aufweist.

8. Polypropylenmaterial, das ein Substrat aus einem geschäumten ersten Polypropylen mit einer Schmelzfestigkeit von mindestens 1 g, einer Kaltverfestigung von mindestens 0,1 g/(m·min), geschlossenen Schaumstoffzellen und einer Dichte von 10 bis 350 kg/m³ und auf dem Substrat eine Haut aus einem ungeschäumten zweiten Polypropylen mit einem Shore-D-Wert von 15 bis 55 aufweist.

9. Verwendung eines ungeschäumten Polypropylens mit einem Shore-D-Wert von 15 bis 55 für die Herstellung von Gegenständen aus einem coextrudierten mehrschichtigen Polypropylen, das eine geschäumte Schicht mit einer ungeschäumten Haut einschließt.

10. Verwendung eines verschäumbaren Polypropylens mit einer Schmelzfestigkeit von mindestens 1 g und eine Kaltverfestigung von mindestens 0,1 g/(m·min) für die Herstellung von Gegenständen aus einem coextrudierten mehrschichtigen Polypropylen, das eine geschäumte Schicht mit einer ungeschäumten Haut einschließt.

11. Gegenstand, umfassend ein Polypropylenmaterial, das ein Substrat aus einem geschäumten ersten Polypropylen mit einer Schmelzfestigkeit von mindestens 1 g, einer Kaltverfestigung von mindestens 0,1 g/(m·min), geschlossenen Schaumstoffzellen und einer Dichte von 10 bis 350 kg/m³ und auf dem Substrat eine Haut aus einem ungeschäumten zweiten Polypropylen mit einem Shore-D-Wert von 15 bis 55 aufweist.

12. Gegenstand nach Anspruch 11 in Form einer Komponente für ein Kraftfahrzeug.

## Revendications

1. Procédé de préparation d'un matériau en mousse de polypropylène portant une peau, ledit procédé comprenant une étape de co-extrusion d'une première composition de polypropylène contenant un agent gonflant et d'une deuxième composition de polypropylène de façon à former une peau non expansée de ladite deuxième composition de polypropylène sur une couche expansée de ladite première composition de polypropylène, ladite couche expansée contenant des alvéoles de mousse fermées, ladite première composition ayant une résistance en fusion d'au moins 1 g et un durcisseur sous déformation d'au moins 0,1 g/(m.min), et ladite deuxième composition ayant une dureté Shore D de 15 à 55.

2. Procédé selon la revendication 1 dans lequel ladite couche expansée a une masse volumique de 10 à 350 kg/m³.

3. Procédé selon la revendication 1 ou 2 dans lequel ladite deuxième composition a une dureté Shore D de 20 à 45.

4. Procédé selon l'une quelconque des revendications 1 à 3 dans lequel ladite première composition de polypropylène est sensiblement non réticulée.

5. Procédé selon l'une quelconque des revendications 1 à 4 dans lequel l'agent gonflant est introduit dans la première composition de polypropylène après l'introduction de ladite composition dans une extrudeuse.

6. Procédé selon l'une quelconque des revendications 1 à 5 dans lequel ledit agent gonflant est utilisé en concentrations de 1 à 2,5% en poids par rapport à ladite première composition de polypropylène.

7. Procédé selon l'une quelconque des revendications 1 à 6 dans lequel ladite première composition de polypropylène possède un indice de fluidité à chaud (230°C/2,16 kg) de 0,3 à 25 g/10 min et une teneur en éthylène de 0 à 25% en poids.

8. Matériau en polypropylène comportant un substrat d'un premier polypropylène expansé ayant une résistance en fusion d'au moins 1 g, un durcisseur sous déformation d'au moins 0,1 g/(m.min), des alvéoles de mousse fermées et une masse volumique comprise entre 10 et 350 kg/m³ et, sur ledit substrat, une peau d'un deuxième polypropylène non expansé ayant une dureté Shore D de 15 à 55.

9. Utilisation d'un polypropylène non expansé ayant une dureté Shore D de 15 à 55 pour la préparation d'articles en polypropylène multicouche co-extrudé contenant une couche expansée avec une peau non expansée.

10. Utilisation d'un polypropylène expansible ayant une résistance en fusion d'au moins 1 g, un durcisseur sous déformation d'au moins 0,1 g/(m.min) pour la préparation d'articles en polypropylène multicouche co-extrudé contenant une couche expansée avec une peau non expansée.

11. Article comprenant un matériau en polypropylène comportant un substrat d'un premier polypropylène expansé ayant une résistance en fusion d'au moins 1 g, un durcisseur sous déformation d'au moins 0,1 g/(m.min), des alvéoles de mousse fermées et une masse volumique comprise entre 10 et 350 kg/m³ et, sur ledit substrat, une peau d'un deuxième polypropylène non expansé ayant une dureté Shore D de 15 à 55.

12. Article selon la revendication 11 sous la forme d'un composant pour véhicule à moteur.
